(19) **Europäisches Patentamt / European Patent Office / Office européen des brevets**

(11) **EP 3 492 280 B1**

(12) **EUROPEAN PATENT SPECIFICATION**

(45) Date of publication and mention
of the grant of the patent:
**05.05.2021 Bulletin 2021/18**

(51) Int Cl.:
**B60C 11/03** (2006.01)

(21) Application number: **18206689.4**

(22) Date of filing: **16.11.2018**

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.12.2017 JP 2017231955**
**06.08.2018 JP 2018147718**

(43) Date of publication of application:
**05.06.2019 Bulletin 2019/23**

(73) Proprietor: **SUMITOMO RUBBER INDUSTRIES, LTD.**
**Kobe-shi,**
**Hyogo-ken 651-0072 (JP)**

(72) Inventors:
• **OGIHARA, Sawa**
**Kobe-shi, Hyogo 651-0072 (JP)**
• **UEDA, Emi**
**Kobe-shi, Hyogo 651-0072 (JP)**

• **MIYAZAWA, Ken**
**Kobe-shi, Hyogo 651-0072 (JP)**
• **SASAKI, Tatsuya**
**Kobe-shi, Hyogo 651-0072 (JP)**
• **SANAE, Ryuhei**
**Kobe-shi, Hyogo 651-0072 (JP)**
• **TANAKA, Masatoshi**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 0 542 493      EP-A1- 2 272 687**
**JP-A- 2000 177 320    US-A- 3 926 238**
**US-A- 5 383 506**

## Description

### Technical field

The present invention relates to a tire provided in the tread portion with a tread pattern in which a tread design unit is repeatedly arranged in the tire circumferential direction at variable pitches.

### Background art

There have been proposed various tread patterns for tires according to conditions of vehicles, road surfaces and the like on which the tires are used.

Most vehicle tires are provided with tread patterns formed by arranging repeatedly and circumferentially of the tire a pattern unit comprising grooves and blocks.

In such a tire, if the pattern unit is repeated at the same pitches, in other words, the circumferentially arranged pattern units have the same circumferential length, unpleasant noise so called "pitch noise" occurs,

Japanese Patent Application Publication No. 2000-177320 (Patent Document 1) discloses a tire in which, in order to reduced pitch noise, amplitudes P(k) (k = order from 1 to n) obtained by Fourier transforming the undermentioned pulse train is limited within a specific range, wherein

on the premise of the tread patter comprising a series of tread design units arranged circumferentially of the tire with variable pitches and thereby the tread design units have variable circumferential lengths, the pulse train is defined by viewing the tread design units as pulses, and arranging the pulses at variable intervals accord with the above-mentioned variable pitches. Thereby, in the tire disclosed in Patent Document 1, amplitudes of peaks of the pitch noise can be equalized over a wide frequency range to turn to white noise, and the pitch noise can be reduced.

Patent Document 1 discloses a tire in accordance with the preamble of claim 1.

### Summary of the invention

### Problems to be solved by the invention

Although the pitch noise of the tire disclosed in Patent Document 1 can be reduced, there is a problem such that noise during running is liable to cause beat noise.

It is therefore, an object of the present invention to provide a tire capable of suppressing the beat noise during running.

According to the present invention, a tire comprises:

a tread portion provided with a tread pattern,
the tread pattern comprising a series R of a number N of tread design units arranged repeatedly and circumferentially of the tire in a sequence,
the tread design units having a number m (m = 2, 3, 4 or 5) of different circumferential lengths,
wherein
when
viewing the tread design units as the number N of pulses, and
defining a first pulse train such that the number N of the pulses are arranged in the same sequence as the tread design units at intervals which are defined by the circumferential lengths of the corresponding tread design units expressed in term of a ratio to one of the above-said number m of different circumferential lengths,
then
a maximum value Pmax of amplitudes P(k) (k = order from 1 to 2N) of frequencies obtained by Fourier transforming the above-said first pulse train with the following formula (1) is limited to values not more than 18.50-0.05N when m=2, 17.50-0.05N when m=3, 16.50-0.05N when m=4, and 15.00-0.05N when m=5,

$$P(k) = \frac{100}{N^2}(a_k^2 + b_k^2)$$

$$a_k = \sum_{j=1}^{N} \sin\left(\frac{2\pi k}{l} \cdot X(j)\right) \qquad --- \quad (1)$$

$$b_k = \sum_{j=1}^{N} \cos\left(\frac{2\pi k}{l} \cdot X(j)\right)$$

wherein

x(j) is the position of the j-th pulse from a beginning of the first pulse train, and
1 (lower-case of L) is a circumference length parameter equal to the sum of the above-said ratios expressing the circumferential lengths of all the tread design units in the series R,
and

the amplitudes P(k) and P(k+1) of every two of the adjacent orders (k) and (k+1) are limited so as not to satisfy a condition that both of the amplitudes P(k) and P(k+1) have values of 2/3 or more times the above-said maximum value Pmax.

The maximum value Pmax may be limited to values not more than 15.50-0.05N when m=2, 14.50-0.05N when m=3, 13.50-0.05N when m=4, and 12.00-0.05N when m=5.

when a second pulse train is further defined by viewing the above-said tread design units as the number N of pulses, and arranging the number N of the pulses in the same sequence as the tread design units at intervals which are defined by the circumferential lengths of the corresponding tread design units expressed in term of a ratio to one of the above-said number m of different circumferential lengths, and further defining magnitudes of the number N of the pulses by the respective circumferential lengths in term of a ratio to the median value of the above-said number m of different circumferential lengths, wherein the average of the magnitudes of the pulses corresponding to the above-said number m of different circumferential lengths is set to 1.00, then amplitude F(1) among amplitudes F(k) (k = order from 1 to 2N) of frequencies obtained by Fourier transforming the above-said second pulse train with the following formula (2), may be limited to values not more than 0.6,

$$F(k) = \frac{10}{k^2}\sqrt{c_k^2 + d_k^2}$$

$$c_k = \sum_{j=1}^{N} p(j) \cdot \sin\left(\frac{2\pi k}{l} \cdot X(j)\right) \qquad --- \quad (2)$$

$$d_k = \sum_{j=1}^{N} p(j) \cdot \cos\left(\frac{2\pi k}{l} \cdot X(j)\right)$$

wherein

P(j) is the magnitude of the j-th pulse (j = 1 to N) counted from a beginning of the second pulse train, and
1 (lower-case of L) is the circumference length parameter equal to the sum of the above-said ratios expressing the circumferential lengths of all the tread design units in the above-said series R.

The amplitude F(1) of the 1st order may be limited to values not more than 0.5.
The number N of the tread design units in the series may be not less than 30 and not more than 90.
The increasing rate of the circumferential lengths of every two of the tread design units arranged adjacently to each other in the tire circumferential direction is in a range from 0.08 to 0.25.

**Brief description of the drawings**

Fig. 1 is a developed partial view of a tread portion of a tire showing a conceptional example of the tread pattern.

Fig. 2 is a diagram showing a first pulse train for obtaining amplitudes P(k).

Fig. 3 is a graph showing the obtained amplitudes P(k).

Fig. 4 is a diagram showing a second pulse train for obtaining amplitudes F(k).

Fig. 5 is a graph showing the obtained amplitudes F(k).

Figs. 6-14 are graphs showing relationships between amplitudes P(k) and order k of test tires A-I, respectively.

## Description of the preferred embodiments

Embodiments of the present invention will now be described in detail with reference to the accompanying drawings.

The present invention can be applied to various vehicle tires including pneumatic tires, airless tire and solid tires.

The tire 1 according to the present invention comprises a tread portion 2 provided with a tread pattern 3.

The tread pattern 3 comprises a series of a number N of tread design units 4 repeatedly arranged circumferentially of the tire and having number m of different circumferential lengths L. Thus, the tread design units 4 are arranged at variable pitches.

The number m of the different circumferential lengths L is two or more, and the upper limit therefor can be arbitrary determined according to conditions of vehicles, road surfaces and the like on which the tires are used. Usually, the number m is set to 2, 3, 4 or 5.

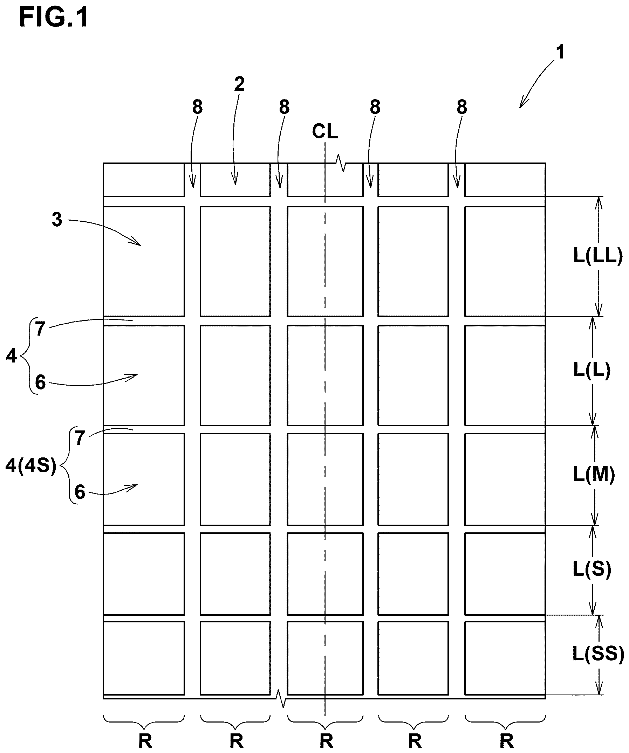

Fig. 1 shows a part in the tire circumferential direction of a simplified example of the tread pattern 3. In this example, the number m of the different circumferential lengths L is 5.

The tread pattern 3 may comprise two or more series of the repeatedly arranged tread design units 4.

In the example shown in Fig. 1, the tread pattern 3 is made up of five series of the repeatedly arranged tread design units 4. In the case of the tread pattern 3 comprising two or more series of the repeatedly arranged tread design units 4, the circumferential positions of the tread design units 4 in each series can be the same as those of the adjacent series as shown in Fig. 1, but they can be shifted in the tire circumferential direction from those of the adjacent series.

In the simplified example of the tread pattern 3 shown in Fig. 1, one tread design unit 4 is made up of one block 6 and one lateral groove 7 adjacent thereto in the tire circumferential direction, and

the tread pattern 3 is a block pattern in which the tread portion is divided into the blocks 6 by the lateral grooves 7 and main grooves 8 continuously extending in the tire circumferential direction intersecting the lateral grooves 7.

In this embodiments, the tread pattern 3 is a block pattern, but the present invention is not limited to block patterns. For example, the present invention can be applied to a tire provided with a tread pattern comprising a circumferentially continuously extending rib which is axially divided by a zigzag circumferential groove. In this case, the tread design units 4 are circumferential parts of the rib defined by the zigzag cycles of the zigzag circumferential groove, for example, between the same points such as between a valley and a valley or between a mountain and a mountain of the zigzag. In the case of the tread pattern 3 comprising lugs such as a lug pattern, by considering the lug as a block, the description of the blocks can be applied to the lugs.

The number N of the tread design units 4 repeatedly arranged in a series can be arbitrary determined. However, if the number N is decreased, there is a possibility that the noise reduction effect by the pitch variation can not be fully exhibited. On the other hand, if the number N is increased, uneven wear of the tread portion 2 becomes liable occur. Therefore, it is desirable that the number N is set in a range of not less than 30 and not more than 90 (30 =< N =< 90). Incidentally, the number N of the tread design units 4 in a series R may be determined depending on the number m of the different circumferential lengths L.

In order to increase the rigidity of the tread portion 2 per pitch to effectively improve the steering stability, and also enhance the noise reduction effect, it is more preferable that the number N is set in a range of not less than 30 and not more than 49 (30 =< N =< 49).

when the different circumferential lengths L of the tread design units 4 in a series are arrange in the order of magnitude, the ratio between the adjacent circumferential lengths may be arbitrary determined. However, if the ratio is large, the difference in rigidity between the adjacent tread design units 4 is liable to increase, and uneven wear is liable to occur. On the other hand, if the ratio is small, pitch noise concentrates in a narrow frequency range, and there is a possibility that the noise reduction effect by the pitch variation can not be fully exhibited.

Therefore, the ratio (increasing rate) of the circumferential lengths L of every two of the tread design units 4 arranged adjacently to each other in the tire circumferential direction is preferably set in a range of about 0.08 to 0.25.

In Fig. 1 showing a part of a simplified example of the tread pattern 3, five series R of the tread design units 4 are shown. In this example, the five tread design units 4 have five different circumferential lengths L.

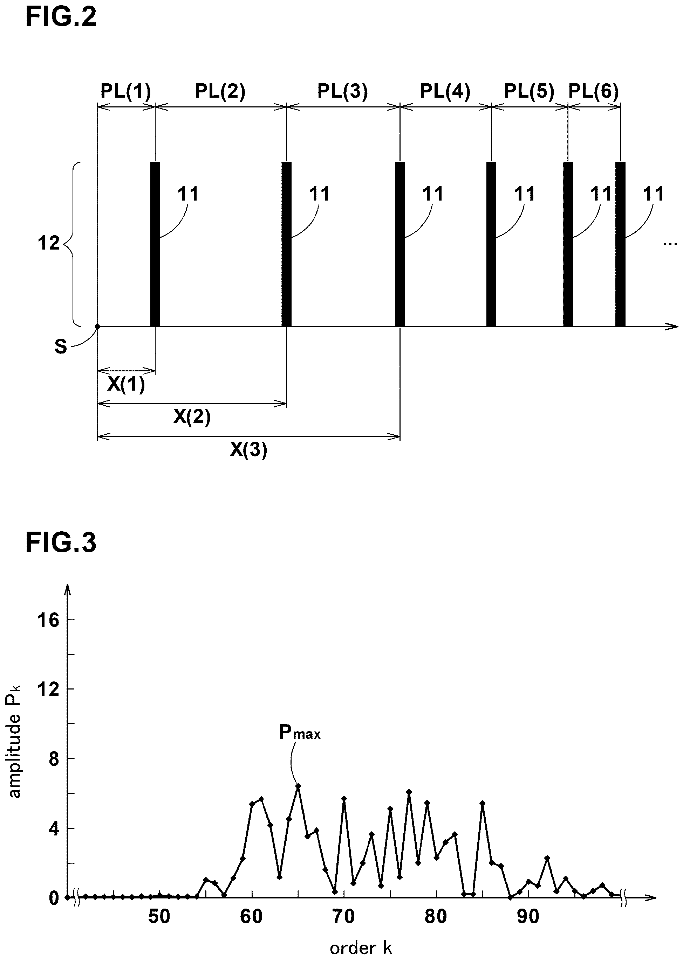

Fig. 2 shows a part of a first pulse train 12 of pulses 11. The first pulse train 12 is formed by viewing the tread design units 4 as the pulses 11, and arranging the pulses 11 at intervals proportional to the respective circumferential lengths L of the tread design units 4, in the same sequence as the tread design units 4. In the first pulse train 12, the pulses 10 have identical magnitude.

In this manner, for each series R, the first pulse train 12 is defined from all the tread design units 4 arranged over the entire circumference of the tire.

In Fig. 2, the vertical axis indicates magnitudes of the pulses 11, and the horizontal axis shows position or time at which each pulse 11 occurs.

The intervals of the pulses 11 are not constant and defined according to the respective circumferential lengths L of the tread design units 4. More specifically, the intervals of the pulses 11 are respectively defined by the circumferential lengths L of the corresponding tread design units 4 expressed in term of a ratio to one of the above-said number m of different circumferential lengths of the tread design units 4 (in Fig. 1, a ratio to the circumferential length of a reference tread design unit 4S). Hereinafter, the above-said ratio expressing the circumferential length is referred to as the "circumferential length ratio PL". Such reference tread design unit 4S is preferably, that arranged at or close to an intermediate position when the tread design units 4 having the different circumferential lengths are arranged in the order of the circumferential lengths L.

According to the present invention, the maximum value Pmax of amplitude P(k) (power spectral density) of frequencies obtained by Fourier transforming the first pulse train 12 by the following formula (1) is limited to values not more than 18.50-0.05N when m=2, 17.50-0.05N when m=3, 16.50-0.05N when m=4, and 15.00-0.05N when m=5,

$$P(k) = \frac{100}{N^2}(a_k^2 + b_k^2)$$

$$a_k = \sum_{j=1}^{N} \sin\left(\frac{2\pi k}{l} \cdot X(j)\right) \qquad --- \quad (1)$$

$$b_k = \sum_{j=1}^{N} \cos\left(\frac{2\pi k}{l} \cdot X(j)\right)$$

wherein

N is the number of the pulses 11 in the first pulse train 12, namely, the number of the tread design units 4 in the series R,
k is a natural number from 1 to 2N, expressing the order,
j is a natural number from 1 to N,
x(j) is the position of the j-th pulse which is the sum of the above-said circumferential length ratio(s) PL(i) from the beginning S of the first pulse train 12 to the j-th pulse (i=1 to j), and
1 is the sum of the above-described circumferential length ratios of all the tread design units 4 in the series R.

For example, as shown in Fig. 2,

$$X(1) = PL(1)$$

$$X(2) = PL(1)+PL(2)$$

$$X(3) = PL(1)+PL(2)+PL(3)$$

$$X(4) = PL(1)+PL(2)+PL(3)+PL(4)$$

$$X(5) = PL(1)+PL(2)+PL(3)+PL(4)+PL(5)$$

namely,
x(j) = Sum of PL(1) to PL(j)

Fig. 3 is a graph as an example showing amplitudes P(k) and orders k of frequencies obtained by Fourier transforming a first pulse train 12.

The amplitude P(k) has a correlation with the magnitude of the noise energy obtained by frequency analyzing the pitch noise of the tire, and the larger the amplitude P(k) is, the larger the noise energy is. The orders k correspond to the frequencies of the pitch noise.

In the formula (1), the order k ranges from 1 to 2N (two times the number N). According to the present invention, the maximum value Pmax of the amplitudes P(k) is limited to be not more than

18.50-0.05N when m=2,
17.50-0.05N when m=3,
16.50-0.05N when m=4, and
15.00-0.05N when m=5.

These upper limit values were discovered by the inventors based on various experimental results. In the experiments conducted by the inventors, test tires different from each other in the number N and the number m were prepared. Then, the test tires were mounted on an actual car, the pitch noise during running was measured for the sound pressure level in the car and also sensory evaluated by the test driver.

On the other hand, for each test tire, a first pulse train was produced and Fourier transformed with the formula (1), and then the maximum value Pmax was obtained from the amplitude P(k) of the k-th order (k = 1 to 2N) of frequencies.

From the results of such test, the inventors have found that, when the maximum value Pmax is limited as descried above, the peaks of the amplitudes P(k) are averaged over a wide range of the order k and lowered, and thereby the pitch noise is reduced.

Further, through the experiments, the inventors have found that the pitch noise can be more effectively reduced by decreasing the upper limit for the maximum value Pmax as the number m is increased. Therefore, in the present invention, the upper limit for the maximum value Pmax is defined, depending on the number m of the different circumferential lengths L as above.

More preferably, the maximum value Pmax is limited to be not more than

15.50-0.05N when m=2,
14.50-0.05N when m=3,
13.50-0.05N when m=4, and
12.00-0.05N when m=5.

Further, through the experiments, the inventors have found that, when the peaks of the amplitudes P(k) are averaged over a wide range of the order k as described above, two sound of adjacent orders of the frequencies tends to produce beats. Namely, in two adjacent orders k and (k+1), if the amplitude P(k+1) is relatively large and comparable to the amplitude P(k), as the difference between the frequency of the order k and the frequency of the order k(k+1) is relatively small, there is a possibility that beat sound whose frequency corresponds to the above difference is generated.

Based on such finding, the tire according to the present invention is configured as follows.

In every two of the adjacent orders k and k+1, their amplitudes P(k) and P(k+1) are limited so as not to satisfy a condition that both of the amplitudes P(k) and P(k+1) have values of 2/3 or more times the maximum value Pmax so that relatively large amplitudes do not occur in the adjacent orders. Thus, the generation of beat sound can be prevented.

If one of the amplitudes P(k) and P(k+1) becomes more than 2/3 times the maximum value Pmax, and the other still keeps values not more than 2/3 times the maximum value Pmax, the beat sound does not become so offensive.

Therefore, according to the present invention, by limiting both amplitudes as above, the beat sound during running can be effectively suppressed.

In order to effectively derive this advantageous effect, it is preferred that, in every two of the adjacent orders k and k+1, their amplitudes P(k) and P(k+1) are limited so as not to satisfy a condition that both of the amplitudes P(k) and P(k+1) have values of 3/5 or more times the maximum value Pmax.

Further, in this embodiment, a second pulse train 16 is formed from the same tread design units 4 in the series R from which the above-said first pulse train 12 is formed.

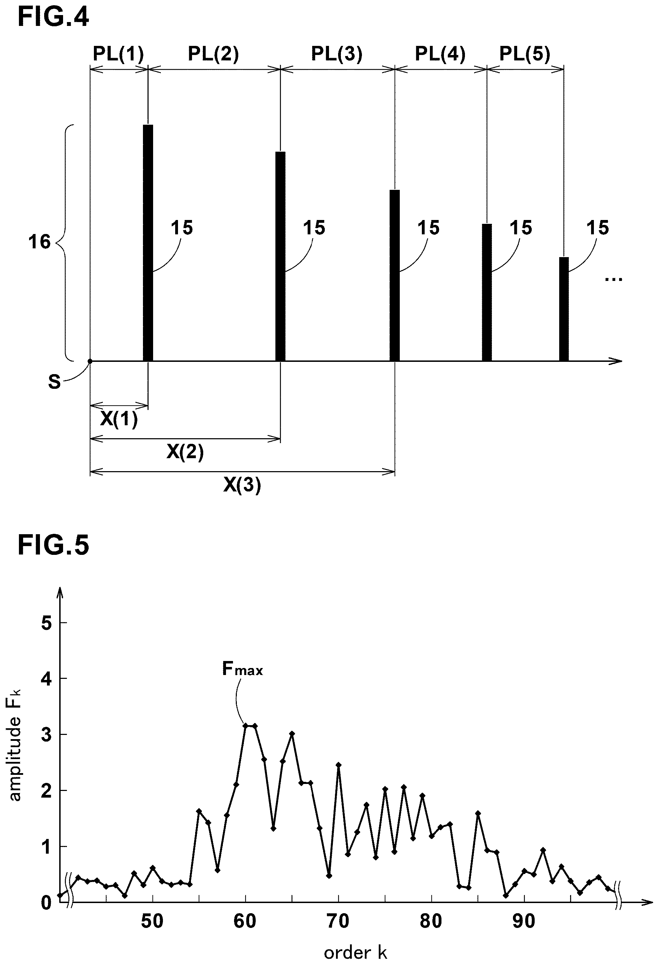

Fig. 4 shows a second pulse train 16 formed from a part of the simplified example of the tread pattern 3 shown in Fig. 1. In Fig. 4, the vertical axis indicates magnitudes P of the pulses 15, and the horizontal axis shows position or time at which each pulse 15 occurs.

As known from the comparison between Fig. 2 and Fig. 4, the difference of the second pulse train 16 from the first pulse train 12 is that the amplitudes of the pulses 15 are not a constant value. Otherwise, the second pulse train 16 is similarly to the first pulse train 12.

Thus, the second pulse train 16 is defined by

viewing the above-said tread design units 4 as the number N of pulses 15, and

arranging the number N of the pulses 15 in the same sequence as the tread design units 4 at intervals which are defined by the circumferential lengths of the corresponding tread design units 4 expressed in term of a ratio to one of the above-said number m of different circumferential lengths L.

In this embodiments, magnitudes P of the pulses 15 are expressed by the respective circumferential lengths L (in Fig. 1, LL, L, M, S and SS) in term of a ratio to the median value of the above-said number m of different circumferential lengths L.

Given amplitudes F(k) (k = order from 1 to 2N) of frequencies obtained by Fourier transforming the second pulse train 16 with the following formula (2),

$$F(k) = \frac{10}{k^2} \sqrt{c_k^2 + d_k^2}$$

$$c_k = \sum_{j=1}^{N} p(j) \cdot \sin\left(\frac{2\pi k}{l} \cdot X(j)\right) \qquad \text{--- (2)}$$

$$d_k = \sum_{j=1}^{N} p(j) \cdot \cos\left(\frac{2\pi k}{l} \cdot X(j)\right)$$

wherein

1 (lower-case of L) is the circumference length parameter equal to the sum of the above-said ratios expressing the circumferential lengths of all the tread design units in the series R,
P(j) is the magnitude of the j-th pulse (j = 1 to N) counted from a beginning of the second pulse train 16, and further
given that the average of the magnitudes P of the pulses 15 corresponding to the above-said number m of different circumferential lengths is set to 1.00,
the amplitude F(1) of the 1st order is preferably set to be not more than 0.6.

Fig. 5 is a graph as an example showing amplitudes F(k) and orders k of frequencies obtained by Fourier transforming a second pulse train 16.
As with the magnitude P(k), the amplitude F(k) has a correlation with the magnitude of the noise energy obtained by frequency analyzing the pitch noise of the tire. Further, the order k has a correlation with the frequency of the noise energy.
In this embodiment, the amplitudes F(k) are used for predicting low order components of noise sound (low frequency noise energy).
In the formula (2), the order k ranges from 1 to 2N (two times the number N).
The amplitude F(1) of the 1st order has much effect on the noise energy generated during one revolution of the tire. In the case of a passenger car tire, for example, when running at 15 to 35 km/h, the 1st order has possibilities of generating beat sound of about 2 to 5 Hz which is uncomfortable for humans.
Through the experiments conducted by the present inventors, it was found out that such beat sound can be effectively suppressed by limiting the amplitude F(1) to values not more than 0.6. Therefore, in this embodiment, as the amplitudes P(k) and P(k+1) are limited so as not to satisfy the condition that both of the amplitudes P(k) and P(k+1) have values of 2/3 or more times the maximum value Pmax and further the amplitude F(1) is limited to values not more than 0.6, the beat sound during running can be more effectively suppressed.
Further, it was also found out that it is desirable, for further reducing the beat sound during running, to reduce the upper limit value for the amplitude F(1) as the number m of the different circumferential lengths of the tread design units 4 in the series R increases. In this embodiment, therefore, it is desirable that the amplitude F(1) is limited to values not more than 0.5 in order to further reduce the beat sound during running.
In this embodiment in which the number m is 5, the average of the magnitudes P of the pulses 15 corresponding to five tread design units 4 respectively having the five different circumferential lengths (LL, L, M, S and SS in Fig. 1) is set to 1.00.
For example, when the number m is 4 and four different circumferential lengths are LL, L, S and SS, the average of the magnitudes P of the pulses 15 corresponding to four tread design units 4 respectively having the four different circumferential lengths (LL, L, S and SS) is set to 1.00.
while detailed description has been made of preferable embodiments of the present invention, the present invention can be embodied in various forms without being limited to the illustrated embodiments.

**Comparison tests**

Pneumatic tires of size 195/65R15 (rim size 15x6.5J) were prepared as test tires A, B, E, F, H and I as embodiments (EX) and C, D and G as references (REF).
The test tires had block patterns based on the pattern shown in Fig. 1, specifications of which are shown in Table 2.
In each of the test tires, the increasing rate of the circumferential lengths L of every two of the tread design units 4 arranged adjacently to each other in the tire circumferential direction was set in the range from 0.08 to 0.25.

The sequence of the tread design units of each test tire is shown in Table 1.

For each test tire, a pulse train was produced as explained above, wherein the above-said average of the magnitude of the pulses was set to 1.00, and

the pulse train was Fourier transformed as explained above to obtain the amplitude F(1) and the maximum value Pmax of the amplitude P(k).

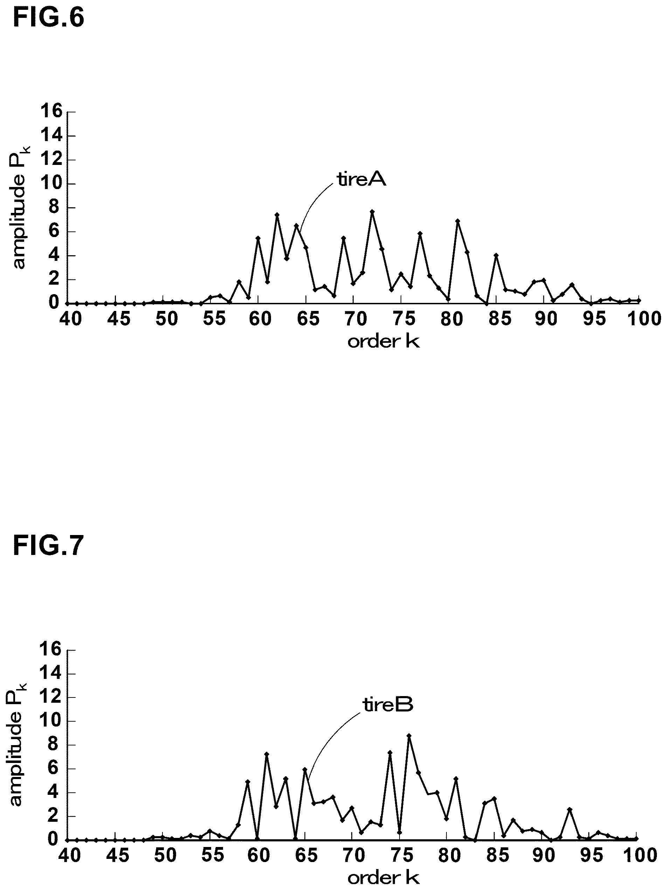

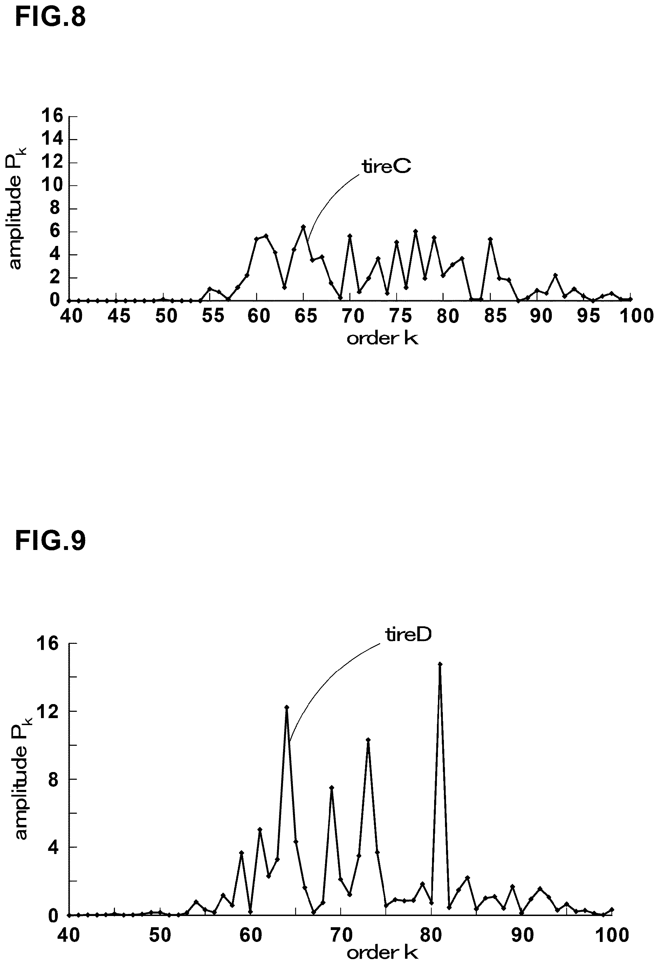

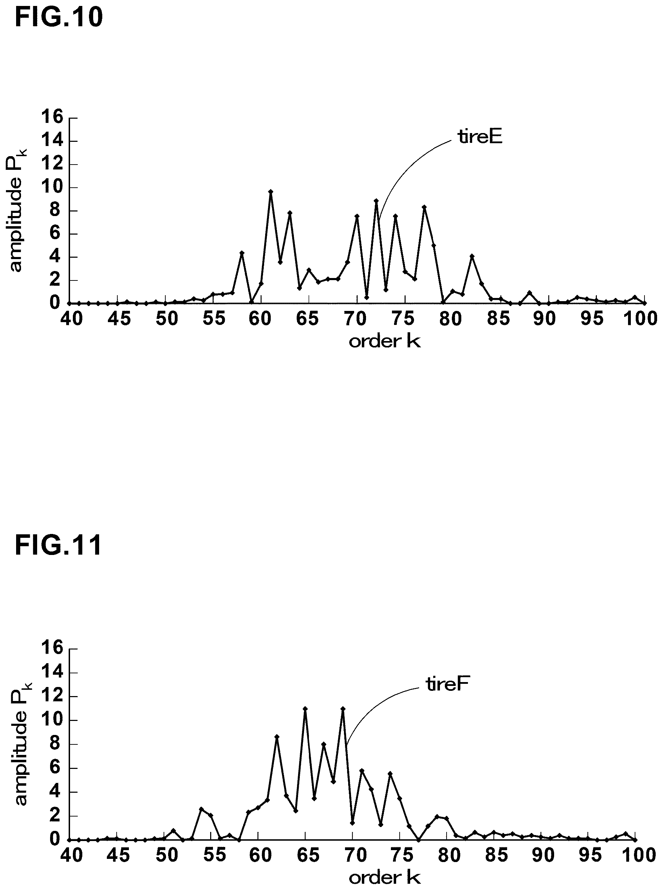

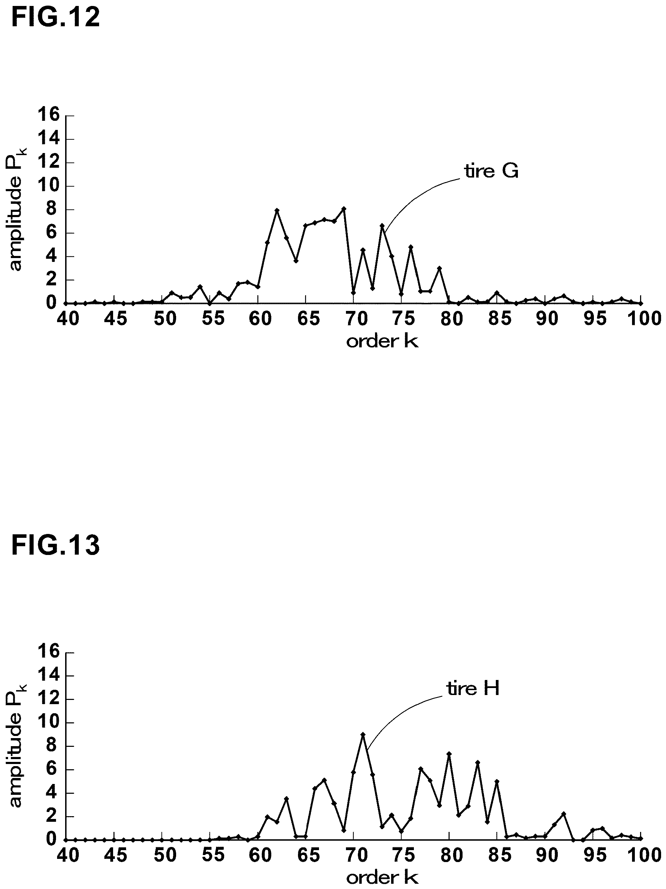

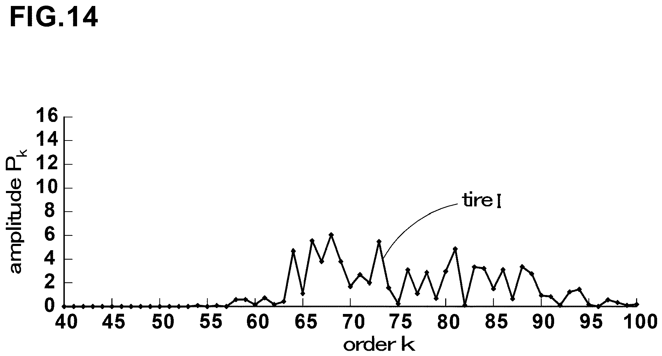

The obtained amplitudes P(k) of the test tires A to I are shown in Figs. 6 to 14, respectively.

< Drum Noise Test >

Using a tire test drum, each test tire mounted on a wheel rim of size 15x6.5 J and inflated to 230 kPa was run under a tire load of 4.20 kN, and

the sound pressure was measured during coasting from 60 km/h to 20 km/h according to the test procedure specified by JASO.

The drum had a diameter of 3.0 m, and its circumferential surface was covered with a friction sheet (product name "Safety Walk" of 3M Japan Limited) to simulate a smooth road surface.

The microphone was fixed at a position, 1 meter from the tire equator in the tire axial direction and 15 cm away from the drum surface in the radial direction of the drum.

Based on data about the sound pressure during coasting at the speeds from 60 to 20 km/h,

a partial overall value of the sound power between a frequency corresponding to the order N+20 and a frequency corresponding to the order N-20 was calculated, and

a speed at which the calculated partial overall values showed a peak was obtained (speeds of 33-40 km/h were obtained). Then, the sound pressure at the obtained speed was obtained as the pitch noise.

Further, the data about the sound pressure at the speed of 34 km/h was wavelet transformed (resolution 16 Hz), and the sound pressure of the 1st order was obtained as the beat sound.

The results are indicated in Table 2 by an index based on the sound pressure of Ex1 (tire A) being 100. The smaller value is better.

< Interior Noise Test >

Using a 1800cc Japanese passenger car with the test tire mounted on the front right wheel and slick tires mounted on the left front wheel and both rear wheels, the pitch noise, beat noise and overall noise including the pitch noise and the beat noise were each evaluated into ten ranks by the test driver during coasting from 60 km/h to 20 km/h on a smooth road surface. (tire pressure 230 kPa, tire load 4.20 kN)

The results are shown in Table 2, wherein the higher rank number is better.

It was confirmed from the test result that, as compared to the reference tires, the tire according to the present invention were improved in the beat noise while reducing the pitch noise.

Table 1

| Tire | N | m | sequence |
|---|---|---|---|
| Tire A | 70 | 5 | LL-L-L-M-LL-L-L-S-SS-S-M-L-S-SS-S-M-L-M-LL-L-M-LL-L-M-M-SS-SS-SS-SS-SS-S-S-M-M-LL-LL-LL-LL-L-S-SS-S-M-L-L-S-SS-S-M-L-LL-L-S-SS-S-M-M-M-L-L-LL-L-M-M-SS-SS-SS-S-M-LL |
| Tire B | 70 | 5 | LL-LL-L-M-S-SS-S-M-L-L-LL-L-M-S-SS-SS-S-S-M-L-LL-L-M-SS-SS-S-M-M-SS-S-M-M-L-L-LL-LL-L-M-SS-SS-S-M-S-SS-SS-S-L-L-L-M-LL-L-M-S-L-LL-L-M-SS-SS-SS-SS-SS-S-M-L-M-S-SS-M |
| Tire C | 70 | 5 | M-L-LL-L-M-S-SS-SS-S-M-L-M-M-S-S-M-L-L-LL-LL-LL-LL-LL-L-M-M-SS-SS-SS-SS-S-M-M-LL-LL-LL-L-LL-L-M-M-M-S-M-SS-SS-S-M-L-LL-LL-LL-L-M-SS-SS-S-M-M-L-LL-L-M-M-SS-SS-SS-SS-S-L |
| Tire D | 70 | 5 | SS-S-M-LL-LL-LL-LL-L-L-M-S-SS-S-M-L-LL-L-S-SS-SS-S-M-L-LL-L-S-SS-S-L-S-M-M-L-L-LL-LL-LL-LL-LL-L-M-M-SS-SS-SS-S-M-L-LL-L-M-M-SS-SS-S-M-LL-LL-L-S-L-LL-L-M-S-M-M-L-L-S |
| Tire E | 68 | 3 | L-L-M-M-S-S-M-L-M-L-M-M-S-S-M-S-M-S-M-L-M-L-L-L-M-S-S-M-S-S-S-S-M-L-L-L-M-L-M-M-S-S-S-S-M-L-L-L-L-L-M-M-S-M-L-M-S-M-S-S-M-S-S-M-M-L |
| Tire F | 66 | 2 | S-S-S-S-S-S-L-L-L-L-S-S-S-L-L-L-L-L-S-S-S-L-S-S-S-L-L-L-L-L-L-S-S-S-L-S-S-L-L-S-S-S-S-S-S-L-L-L-S-L-S-S-S-S-S-S-L-L-S-S-L-L-L-L-L-S |
| Tire G | 66 | 2 | L-L-L-S-S-S-S-S-L-S-L-L-S-S-L-L-L-S-S-S-L-L-S-S-S-S-S-S-S-S-L-L-L-L-S-S-S-S-S-L-L-L-L-L-S-L-L-L-S-S-S-S-S-S-L-S-S-L-L-L-L-L-L-S-S |
| Tire H | 74 | 4 | S-S-SS-L-L-LL-L-LL-L-S-S-S-SS-S-SS-SS-SS-S-LL-L-LL-L-SS-SS-SS-S-L-L-S-L-LL-LL-L-S-S-SS-SS-S-L-L-SS-L-L-LL-L-LL-LL-LL-S-S-SS-SS-L-SS-SS-SS-L-LL-L-L-S-SS-S-LL-S-LL-S-SS-SS-S-SS-L-LL-LL |
| Tire I | 74 | 4 | LL-LL-L-S-SS-S-SS-S-L-LL-LL-LL-L-S-SS-SS-SS-S-L-LL-LL-L-L-L-L-LL-LL-LL-LL-L-L-S-SS-SS-S-L-S-SS-S-L-LL-LL-LL-L-LL-LL-L-L-S-SS-SS-S-SS-SS-SS-SS-SS-S-S-L-LL-L-S-S-L-LL-L-L-L-S-SS-S-L-LL-LL |

Table 2

| Tire | EX 1 Tire A | EX 2 Tire B | REF 1 Tire C | REF 2 Tire D | EX 3 Tire E | EX 4 Tire F | REF 3 Tire G | EX 5 Tire H | EX 6 Tire I |
|---|---|---|---|---|---|---|---|---|---|
| N | 70 | 70 | 70 | 70 | 68 | 66 | 66 | 74 | 74 |
| m | 5 | 5 | 5 | 5 | 3 | 2 | 2 | 4 | 4 |
| Pmax | 7.70 | 8.83 | 6.40 | 14.78 | 9.59 | 10.99 | 8.09 | 9.66 | 12.68 |
| upper limit for Pmax | 11.50 | 11.50 | 11.50 | 11.50 | 14.10 | 15.20 | 15.20 | 12.80 | 12.80 |
| preferable upper limit for Pmax | 8.50 | 8.50 | 8.50 | 8.50 | 11.10 | 12.20 | 12.20 | 9.80 | 9.80 |
| number of position *1 | 0 | 0 | 2 | 0 | 0 | 0 | 5 | 0 | 0 |
| F(1) | 0.19 | 0.04 | 0.52 | 0.07 | 0.27 | 0.41 | 0.31 | 0.49 | 0.39 |
| upper limit for F(1) | 0.6 | 0.6 | 0.6 | 0.6 | 0.6 | 0.6 | 0.6 | 0.6 | 0.6 |
| preferable upper limit for F(1) | 0.5 | 0.5 | 0.5 | 0.5 | 0.5 | 0.5 | 0.5 | 0.5 | 0.5 |
| Drum Noise Test | | | | | | | | | |
| pitch noise | 100 | 103 | 98 | 130 | 96 | 105 | 100 | 110 | 121 |
| beat noise | 100 | 105 | 161 | 105 | 100 | 103 | 207 | 100 | 110 |
| Interior Noise Test | | | | | | | | | |
| pitch noise | 5.9 | 5.7 | 6.0 | 4.2 | 6.3 | 5.6 | 6.0 | 5.4 | 6.3 |
| beat noise | 8.0 | 7.9 | 5.8 | 7.7 | 6.8 | 7.8 | 5.0 | 8.0 | 7.4 |
| pitch + beat noise | 7.0 | 6.8 | 5.9 | 6.0 | 6.6 | 6.7 | 5.5 | 6.9 | 6.2 |

*1) the number of position in a series of the tread design units where the limitation to 2/3 times Pmax was not satisfied.

## Claims

1. A tire (1) comprising:

a tread portion (2) provided with a tread pattern (3),
the tread pattern (3) comprising a series of a number N of tread design units (4) arranged repeatedly and circumferentially of the tire (1) in a sequence,
the tread design units (4) having a number m, m = 2, 3 , 4, or 5, of different circumferential lengths (L), **characterised in that**, when
viewing the tread design units (4) as the number N of pulses, and
defining a first pulse train (12) such that the number N of the pulses (11) are arranged in the same sequence as the tread design units (4) at intervals which are defined by the circumferential lengths (L) of the corresponding tread design units expressed in term of a ratio to one of said number m of different circumferential lengths (L), a maximum value Pmax of amplitudes P(k), k = order from 1 to 2N, of frequencies obtained by Fourier transforming said first pulse train (12) with the following formula (1) is not more than 18.50-0.05N when m=2, 17.50-0.05N when m=3, and 15.00-0.05N when m=5, and/or 16.50-0.05N when m=4,

$$P(k) = \frac{100}{N^2}(a_k^2 + b_k^2)$$

$$a_k = \sum_{j=1}^{N} \sin\left(\frac{2\pi k}{l} \cdot X(j)\right) \qquad --- \ (1)$$

$$b_k = \sum_{j=1}^{N} \cos\left(\frac{2\pi k}{l} \cdot X(j)\right)$$

wherein

X(j) is the position of the j-th pulse from a beginning of the first pulse train (12), and
1 is a circumference length parameter equal to the sum of said ratios expressing the circumferential lengths of all the tread design units (4) in said series,
and

the amplitudes P(k) and P(k+1) of every two of the adjacent orders (k) and (k+1) do not satisfy a condition that both of the amplitudes P(k) and P(k+1) have values of 2/3 or more times said maximum value Pmax.

2. The tire (1) according to claim 1, wherein
the maximum value Pmax is not more than 15.50-0.05N when m=2, 14.50-0.05N when m=3, and 12.00-0.05N when m=5, and/or 13.50-0.05N when m=4.

3. The tire (1) according to claim 1 or 2, wherein when a second pulse train (16) is further defined by viewing the above-said tread design units (4) as the number N of pulses, and
arranging the number N of the pulses in the same sequence as the tread design units (4) at intervals which are defined by the circumferential lengths (L) of the corresponding tread design units (4) expressed in term of a ratio to one of the above-said number m of different circumferential lengths, and further
defining magnitudes of the number N of the pulses by the respective circumferential lengths in term of a ratio to the median value of the above-said number m of different circumferential lengths (L), wherein the average of the magnitudes of the pulses corresponding to the above-said number m of different circumferential lengths is set to 1.00, then
amplitude F(1) among amplitudes F(k), k = order from 1 to 2N, of frequencies obtained by Fourier transforming the second pulse train (16) with the following formula (2), is not more than 0.6,

$$F(k) = \frac{10}{k^2}\sqrt{c_k^2 + d_k^2}$$

$$c_k = \sum_{j=1}^{N} p(j) \cdot \sin\left(\frac{2\pi k}{l} \cdot X(j)\right) \qquad ---(2)$$

$$d_k = \sum_{j=1}^{N} p(j) \cdot \cos\left(\frac{2\pi k}{l} \cdot X(j)\right)$$

wherein

P(j) is the magnitude of the j-th pulse (j = 1 to N) counted from a beginning of the second pulse train, and
1 is a circumference length parameter equal to the sum of the above-said ratios expressing the circumferential lengths (L) of all the tread design units (4) in said series.

4. The tire (1) according to claim 3, wherein
the amplitude F(1) of the 1st order is not more than 0.5.

5. The tire (1) according to claim 1, 2, 3 or 4, wherein
the number N of the tread design units (4) in said series is not less than 30 and not more than 90.

**6.** The tire (1) according to claim 1, 2, 3, 4 or 5, wherein
the increasing rate of the circumferential lengths (L) of every two of the tread design units (4) arranged adjacently to each other in the tire circumferential direction is in a range from 0.08 to 0.25.

**Patentansprüche**

**1.** Reifen (1), umfassend:

einen Laufflächenabschnitt (2), der mit einem Laufflächenprofil (3) versehen ist,
wobei das Laufflächenprofil (3) eine Reihe einer Anzahl N von Laufflächen-Designeinheiten (4) umfasst, die wiederholt und in Umfangsrichtung des Reifens (1) in einer Reihenfolge angeordnet sind,
wobei die Laufflächen-Designeinheiten (4) eine Anzahl m, m = 2, 3, 4 oder 5, von unterschiedlichen Umfangslängen (L) aufweisen,
**dadurch gekennzeichnet, dass**,
bei
Betrachten der Laufflächen-Designeinheiten (4) als die Anzahl N von Impulsen, und
Definieren einer Impulsfolge (12) derart, dass die Anzahl N der Impulse (11) in der gleichen Reihenfolge wie die Laufflächen-Designeinheiten (4) in Intervallen angeordnet sind, die durch die Umfangslängen (L) der entsprechenden Laufflächen-Designeinheiten definiert sind, ausgedrückt als ein Verhältnis zu einer der Anzahl m von unterschiedlichen Umfangslängen (L),
ein Maximalwert Pmax von Amplituden P(k), k = Ordnung von 1 bis 2N, von Frequenzen, die durch Fourier-Transformation der ersten Impulsfolge (12) mit der folgenden Formel (1) erhalten werden, nicht mehr als 18,50-0,05N beträgt, wenn m=2, 17,50-0,05N, wenn m=3, und 15,00-0,05N, wenn m=5, und/oder 16,50-0,05N, wenn m=4,

$$P(k) = \frac{100}{N^2}(a_k^2 + b_k^2)$$

$$a_k = \sum_{j=1}^{N} \sin\left(\frac{2\pi k}{l} \cdot X(j)\right) \qquad \text{- - - (1)}$$

$$b_k = \sum_{j=1}^{N} \cos\left(\frac{2\pi k}{l} \cdot X(j)\right)$$

wobei

X(j) die Position des j-ten Impulses von einem Beginn der ersten Impulsfolge (12) ist, und
$l$ ein Umfangslängenparameter ist, der gleich der Summe der Verhältnisse ist, die die Umfangslängen (L) aller Laufflächen-Designeinheiten (4) in der Reihe ausdrückt, und,
die Amplituden P(k) und P(k+1) von jeweils zwei der benachbarten Ordnungen (k) und (k+1) nicht die Bedingung erfüllen, dass beide der Amplituden P(k) und P(k+1) Werte von 2/3 oder mehr des Maximalwertes Pmax aufweisen.

**2.** Reifen (1) nach Anspruch 1, wobei
der Maximalwert Pmax nicht mehr als 15,50-0,05N beträgt, wenn m=2, 14,50-0,05N, wenn m=3, und 12,00-0,05N, wenn m=5, und/oder 13,50-0,05N, wenn m=4.

**3.** Reifen (1) nach Anspruch 1 oder 2, wobei,
wenn eine zweite Impulsfolge (16) weiter definiert ist durch

Betrachten der oben genannten Laufflächen-Designeinheiten (4) als die Anzahl N von Impulsen, und
Anordnen der Anzahl N der Impulse in der gleichen Reihenfolge wie die Laufflächen-Designeinheiten (4) in Intervallen, die durch die Umfangslängen (L) der entsprechenden Laufflächen-Designeinheiten (4) definiert sind, ausgedrückt als Verhältnis zu einer der oben genannten Anzahl m unterschiedlicher Umfangslängen, und ferner
Definieren von Größen der Anzahl N der Impulse durch die jeweiligen Umfangslängen in Form eines Verhältnisses zum Medianwert der oben genannten Anzahl m unterschiedlicher Umfangslängen (L), wobei der Mittelwert der Größen der Impulse, die der oben genannten Anzahl m unterschiedlicher Umfangslängen entsprechen, auf 1,00 gesetzt wird,
dann

Amplitude F(1) unter den Amplituden F(k), k = Ordnung von 1 bis 2N, von Frequenzen, die durch Fourier-Transformation der zweiten Impulsfolge (16) mit der folgenden Formel (2) erhalten werden, nicht mehr als 0,6 beträgt,

$$F(k) = \frac{10}{k^2}\sqrt{c_k^2 + d_k^2}$$

$$c_k = \sum_{j=1}^{N} p(j) \cdot \sin\left(\frac{2\pi k}{l} \cdot X(j)\right) \qquad \text{- - - (2)}$$

$$d_k = \sum_{j=1}^{N} p(j) \cdot \cos\left(\frac{2\pi k}{l} \cdot X(j)\right)$$

wobei

P(j) die Größe des j-ten Impulses (j = 1 bis N) ist, gezählt von einem Beginn der zweiten Impulsfolge, und *l* ein Umfangslängenparameter ist, der gleich der Summe der oben genannten Verhältnisse ist, die die Umfangslängen (L) aller Laufflächen-Designeinheiten (4) in der Reihe ausdrückt, und.

4. Reifen (1) nach Anspruch 3, wobei
die Amplitude F(1) der 1. Ordnung nicht mehr als 0,5 beträgt.

5. Reifen (1) nach Anspruch 1, 2, 3 oder 4, wobei
die Anzahl N der Laufflächen-Designeinheiten (4) in der Reihe nicht weniger als 30 und nicht mehr als 90 beträgt.

6. Reifen (1) nach Anspruch 1, 2, 3, 4 oder 5, wobei
die Anstiegsrate der Umfangslängen (L) von jeweils zwei der Laufflächen-Designeinheiten (4), die in der Reifenumfangsrichtung benachbart zueinander angeordnet sind, im Bereich von 0,08 bis 0,25 liegt.

**Revendications**

1. Pneumatique (1) comprenant :

une portion formant bande de roulement (2) dotée d'un motif de bande de roulement (3),
le motif de bande de roulement (3) comprenant une série d'un nombre N d'unités de design de bande de roulement (4, agencées de manière répétée et circonférentiellement sur le pneumatique (1) dans une séquence,
les unités de design de bande de roulement (4) ayant un nombre m, m = 2, 3, 4 ou 5, de longueurs circonférentielles différentes (L),
**caractérisé en ce que**
quand
en considérant les unités de design de bande de roulement (4) comme le nombre N d'impulsions, et
en définissant un premier train d'impulsions (12) de sorte que le nombre N des impulsions (11) est agencé dans la même séquence que les unités de design de bande de roulement (4) à des intervalles qui sont définis par les longueurs circonférentielles (L) des unités de design de bande de roulement correspondantes, exprimées sous la forme d'un rapport à une longueur parmi ledit nombre m de longueurs circonférentielles différentes (L), une valeur maximum Pmax d'amplitudes P(k), k = ordre depuis 1 jusqu'à 2N, de fréquences obtenues par transformation de Fourier dudit premier train d'impulsions (12) avec la formule suivante (1) n'est pas supérieure à 18,50-0,05N quand m = 2, 17,50-0,05N quand m = 3, et 15,00-0,05N quand m = 5, et/ou 16,50-0,05N quand m = 4,

$$P(k) = \frac{100}{N^2}(a_k^2 + b_k^2)$$

$$a_k = \sum_{j=1}^{N} \sin\left(\frac{2\pi k}{l} \cdot X(j)\right) \qquad --- \quad (1)$$

$$b_k = \sum_{j=1}^{N} \cos\left(\frac{2\pi k}{l} \cdot X(j)\right)$$

dans laquelle

$X(j)$ est la position de la j-ième impulsion depuis un début du premier train d'impulsions (12), et

$l$ est un paramètre de longueur de circonférence égal à la somme desdits rapports exprimant les longueurs circonférentielles de toutes les unités de design de bande de roulement (4) dans ladite série, et

les amplitudes P(k) et P(k+1) d'un ordre adjacent (k) et (k+1) sur deux ne satisfont pas une condition selon laquelle les deux amplitudes P(k) et P(k+1) ont des valeurs égales à 2/3 fois, ou plus, ladite valeur maximum Pmax.

2. Pneumatique (1) selon la revendication 1, dans lequel la valeur maximum Pmax n'est pas supérieure à 15,50-0,05N quand m = 2, 14,50-0,05N quand m = 3, et 12,00-0,05N quand m = 5, et/ou 13,50-0,05N quand m = 4.

3. Pneumatique (1) selon la revendication 1 ou 2, dans lequel
quand un second train d'impulsions (16) est en outre défini
en considérant les unités de design de bande de roulement précitées (4) comme le nombre N d'impulsions, et

en agençant le nombre N d'impulsions dans la même séquence que les unités de design de bande de roulement (4) à des intervalles qui sont définis par les longueurs circonférentielles (L) des unités de design de bande de roulement correspondantes (4) exprimées sous la forme d'un rapport à une longueur parmi le nombre précité m de longueurs circonférentielles différentes, et en outre

en définissant des grandeurs du nombre N des impulsions via les longueurs circonférentielles respectives sous la forme d'un rapport à la valeur médiane du nombre précité m de longueurs circonférentielles différentes (L) dans lequel la moyenne des grandeurs des impulsions correspondant au nombre précité m de longueurs circonférentielles différentes est établie à 1,00, alors

une amplitude F(1) parmi des amplitudes F(k), k = ordre depuis 1 jusqu'à 2N, de fréquences obtenues par transformation de Fourier du second train d'impulsions (16) avec la formule suivante (2) n'est pas supérieure à 0,6,

$$F(k) = \frac{10}{k^2}\sqrt{c_k^2 + d_k^2}$$

$$c_k = \sum_{j=1}^{N} p(j) \cdot \sin\left(\frac{2\pi k}{l} \cdot X(j)\right) \qquad ---(2)$$

$$d_k = \sum_{j=1}^{N} p(j) \cdot \cos\left(\frac{2\pi k}{l} \cdot X(j)\right)$$

dans laquelle

P(j) est la grandeur de la j-ième impulsion (j = 1 jusqu'à N) comptée à partir d'un début du second train d'impulsions, et

$l$ est un paramètre de longueurs de circonférence égal à la somme des rapports précités exprimant les longueurs circonférentielles (L) de toutes les unités de design de bande de roulement (4) dans ladite série.

4. Pneumatique (1) selon la revendication 3, dans lequel l'amplitude F(1) du 1$^{er}$ ordre n'est pas supérieure à 0,5.

5. Pneumatique (1) selon la revendication 1, 2, 3 ou 4, dans lequel le nombre N des unités de design de bande de roulement (4) dans ladite série n'est pas inférieur à 30 et n'est pas supérieur à 90.

6. Pneumatique (1) selon la revendication 1, 2, 3, 4 ou 5, dans lequel le taux d'augmentation des longueurs circonférentielles (L) d'une unité de design de bande de roulement (4) sur deux agencées de manière adjacente les unes aux autres dans la direction circonférentielle du pneumatique est dans une plage allant de 0,08 à 0,25.

# FIG.1

# FIG.2

PL(1)  PL(2)  PL(3)  PL(4)  PL(5)  PL(6)

11    11    11    11    11   11    11

12

S

X(1)

X(2)

X(3)

# FIG.3

P_max

# FIG.4

# FIG.5

# FIG.6

# FIG.7

## FIG.8

## FIG.9

## FIG.10

tireE

amplitude $P_k$

order k

## FIG.11

tireF

amplitude $P_k$

order k

## FIG.12

## FIG.13

# FIG.14

**REFERENCES CITED IN THE DESCRIPTION**

**Patent documents cited in the description**

- JP 2000177320 A